# EUROPEAN PATENT SPECIFICATION

(11) **EP 3 509 221 B1**
(45) Date of publication and mention of the grant of the patent: **20.04.2022**
(21) Application number: 17846212.3
(22) Date of filing: 22.08.2017
(51) Int. Cl.: H04B 1/40, H04B 1/525

(54) **WIRELESS COMMUNICATION DEVICE**
DRAHTLOSKOMMUNIKATIONSVORRICHTUNG
DISPOSITIF DE COMMUNICATION SANS FIL

(30) Priority: 31.08.2016 JP 2016169966
(43) Date of publication of application: 10.07.2019
(73) Proprietor: Murata Manufacturing Co., Ltd., Nagaokakyo-shi, Kyoto 617-8555 (JP)
(72) Inventor: YOKOTE, Koudai, Nagaokakyo-shi Kyoto 617-8555 (JP); NIWA, Hiroyuki, Nagaokakyo-shi Kyoto 617-8555 (JP); HOSOKAWA, Toshihiro, Nagaokakyo-shi Kyoto 617-8555 (JP); IBARAKI, Suguya, Nagaokakyo-shi Kyoto 617-8555 (JP); KIDERA, Takuya, Nagaokakyo-shi Kyoto 617-8555 (JP); HORIBE, Takayuki, Nagaokakyo-shi Kyoto 617-8555 (JP); NAKAI, Ryuhei, Nagaokakyo-shi Kyoto 617-8555 (JP); AMACHI, Nobumitsu, Nagaokakyo-shi Kyoto 617-8555 (JP)
(74) Representative: Zimmermann, Tankred Klaus
(86) International application number: PCT/JP2017/029929
(87) International publication number: WO 2018/043207

(56) References cited:
- JP-A- 2007 318 678
- JP-A- 2012 199 687
- JP-A- 2017 046 150
- US-A1- 2007 093 270
- US-A1- 2011 215 971
- US-A1- 2015 133 185

## Description

### Technical Field

The present invention relates to wireless communication devices and, more particularly, to a wireless communication device that performs wireless communication based on a plurality of different wireless communication systems that use the same frequency band.

### Background Art

Wireless communication devices that perform wireless communication based on a plurality of different wireless communication systems have been proposed to meet a variety of wireless communication usage (for example, see Non-patent document 1).

Non-patent document 1 discloses a gateway compatible with two types of wireless communication systems, Wireless LAN (Wi-Fi (Registered trademark)) and Bluetooth (Registered trademark). Such gateway allows connection with devices compatible with wireless LAN as well as devices compatible with Bluetooth (Registered trademark).

### Citation List

### Non-Patent Document

Non-Patent Document 1: Ishibashi, Yasuhiro and two others (2002) "Wireless LAN Broadband Gateway Series WBG-1000, 1200", Toshiba Review, Vol. 57, No. 10, pp. 28-32.

### Summary of Invention

### Technical Problem

In the gateway disclosed in the foregoing Non-patent document 1, however, there is an issue that a plurality of different wireless communication systems that use the same frequency band cannot be used together (used simultaneously) or when used together, smooth communication cannot be obtained. In other words, in the gateway disclosed in the foregoing Non-patent document 1, smooth communication cannot be obtained when wireless communication by Wi-Fi (Registered trademark) and wireless communication by Bluetooth (Registered trademark) are used together at the same frequency band. This is because radio wave interference causes Intra-channel interference where another station's signal directly enters a reception band to cause reception errors or Inter-channel interference where distortion or the like caused by reception of out-of-band noise of another station's signal or reception of another station's signal itself causes reception errors, or often causes the carrier sense where transmission of its own signal is suppressed (losing transmission opportunity) upon detection of another station's signal.

In recent years, various wireless communication systems are widely used. For example, the 2.4 GHz band is used in wireless communication systems such as Wi-Fi (Registered trademark), Bluetooth (Registered trademark), ZigBee (Registered trademark), and the like. There is demand for wireless communication devices that can perform smooth wireless communication based on at least two of the wireless communication systems simultaneously, which use this 2.4 GHz band, from among the wireless communication systems such as Wi-Fi (Registered trademark), Bluetooth (Registered trademark), ZigBee (Registered trademark), and the like. In wireless communication systems such as Wi-SUN (Registered trademark), EnOcean (Registered trademark), LoRa (Registered trademark), Sigfox (Registered trademark), and the like, the 800/900 MHz band (920 MHz band in Japan) is used. There is a demand for wireless communication devices that can perform smooth wireless communication based on at least two of the wireless communication systems simultaneously, which use this frequency band, from among the wireless communication systems such as Wi-SUN (Registered trademark), EnOcean (Registered trademark), LoRa (Registered trademark), Sigfox (Registered trademark), and the like.

Prior art wireless communication devices cannot use wireless communication based on a plurality of different wireless communication systems together, which use the same frequency band, or cannot perform smooth wireless communication based on a plurality of wireless communication systems simultaneously. This raises an issue that the prior art wireless communication device cannot be used in many usage cases such as, for example, receiving an operation instruction from a smartphone via wireless LAN based on Wi-Fi (Registered trademark) while controlling a lighting apparatus using wireless communication based on ZigBee (Registered trademark).

US 2007/093270 A1 describes a method for controlling antenna use in a computing device which comprises determining which wireless transceiving devices are active, and if multiple wireless transceiving devices are active, disabling transmission/reception diversity such that each wireless transceiving device may only use one respective antenna.

US 2015/133185 A1 describes approaches to mitigate coexistence interference among multiple wireless subsystems and wired connection ports of a computing device. A processor obtains configurations for at least two wireless subsystems and for a connection state of at least one wired connection port. When the first and second wireless subsystem configurations or the connection state of the wired connection port indicate potential or actual coexistence interference, the processor is configured to adjust wireless circuitry of the first and second wireless subsystems.

US 2011/215971 A1 describes a diversity antenna system that operates within a low frequency band ranging from 700 Megahertz. A plurality of antennas are folded onto a single printed circuit in a meander pattern configuration. Each antenna has an independent feed port and ground pin. The plurality of antennas are configured within a compact mobile phone space to produce a high isolation and low correlation at resonating frequencies within the 700 Megahertz frequency band.

Accordingly, an object of the present invention is to provide a wireless communication device capable of performing smooth wireless communication based on a plurality of different wireless communication systems simultaneously, which use the same frequency band.

This object is achieved by a wireless communication device according to claim 1.

### Solution to Problem

In order to achieve the foregoing object, a wireless communication device according to one aspect of the present invention includes a housing; and a first board placed inside the housing, wherein a first communication circuit and a first antenna that perform wireless communication based on a first wireless communication system that uses a first frequency band and a second communication circuit and a second antenna that perform wireless communication based on a second wireless communication system that uses the first frequency band are mounted on the first board, the second wireless communication system being different from the first wireless communication system, and the first antenna and the second antenna are respectively placed in a first region and a second region that are in a diagonal spatial relationship in plan view of the first board. The first antenna and the second antenna are arranged on the first board in such a way that principal radiation directions of the first antenna and the second antenna are orthogonal to each other

Because of this, the first antenna and the second antenna, which are compatible with a plurality of different wireless communication systems that use the same frequency band, are respectively placed in the first region and the second region that are in a diagonal spatial relationship in plan view of the first board to be placed at locations separate from each other, thereby suppressing radio wave interference between the wireless communication using the first antenna and the wireless communication using the second antenna. As a result, it becomes possible to perform smooth wireless communication based on a plurality of different wireless communication systems simultaneously, which use the same frequency band. Because of the suppression of radio wave interference, the retransmission rate during wireless communication caused by the interference is also suppressed, thereby reducing electric power consumption associated with the retransmission. The principal radiation direction of the first antenna and the principal radiation direction of the second antenna that use the same frequency band are orthogonal to each other, which enables further suppression of the radio wave interference between the wireless communication that uses the first antenna and the wireless communication that uses the second antenna, thereby realizing the wireless communication device having good reception.

A third communication circuit and a third antenna that perform wireless communication based on a third wireless communication system that uses a second frequency band, the second frequency band being different from the first frequency band, and a fourth communication circuit and a fourth antenna that perform wireless communication based on a fourth wireless communication system that uses the second frequency band, the fourth wireless communication system being different from the third wireless communication system, may be further mounted on the first board, and the third antenna and the fourth antenna may respectively be arranged in a third region and a fourth region that are in a diagonal spatial relationship in plan view of the first board, each of the third region and the fourth region being different from both the first region and the second region.

Because of this, as with the first antenna and the second antenna, the third antenna and the fourth antenna, which are compatible with the different wireless communication systems that use the second frequency band different from the first frequency band, respectively arranged in the third region and the fourth region that are in the diagonal spatial relationship in plan view of the first board to be placed at locations separate from each other, thereby suppressing radio wave interference between the wireless communication using the third antenna and the wireless communication using the fourth antenna. Accordingly, it becomes possible to perform smooth wireless communication based on two sets of two types of different wireless communication systems, namely, four types of wireless communication systems simultaneously, which use the same frequency band.

The third antenna and the fourth antenna may be arranged on the first board in such a way that principal radiation directions of the third antenna and the fourth antenna are orthogonal to each other.

Because of this, as with the first antenna and the second antenna, the principal radiation direction of the third antenna and the principal radiation direction of the fourth antenna that use the same frequency band are orthogonal to each other, and this enables further suppression of the radio wave interference between the wireless communication that uses the third antenna and the wireless communication that uses the fourth antenna, thereby realizing the wireless communication device having good reception.

Of communication circuits and antennas mounted on the first board, the first communication circuit and the first antenna may perform communication using a widest frequency band or perform most frequent communication, and of the communication circuits and the antennas mounted on the first board, the third communication circuit and the third antenna may be mounted at a location closest to the first communication circuit and the first antenna and arranged on a second plane whose height from the first board is different from that of a first plane on which the first communication circuit and the first antenna are mounted.

Because of this, the first communication circuit and the first antenna, which perform communication using a widest frequency band or perform most frequent communication in the communication circuits and antennas mounted on the first board, and the third communication circuit and the third antenna, which are mounted at a location closest to the first communication circuit and the first antenna, are placed at the planes of different heights. Thus, compared with a case where the first communication circuit and the first antenna and the third communication circuit and the third antenna are placed on the same plane, out-of-band radio wave interference between the wireless communication using the first communication circuit and the first antenna and the wireless communication using the third communication circuit and the third antenna is suppressed.

The first plane may be a principal surface of the first board, the second plane may be a principal surface of the second board connected to the first board using a board joining connector.

Because of this, the first communication circuit and the first antenna and the third communication circuit and the third antenna are placed on different boards, which are connected using the board joining connector, and these boards are detachable. Thus, a combination of boards to be used together can be changed easily, thereby making it possible to flexibly meet various needs.

The third wireless communication system may be a wireless communication system of a type in which a frequency band to be used or a wireless communication system to be used or both are different depending on a delivery destination of the wireless communication device.

Because of this, the second board on which the third communication circuit and the third antenna are arranged is connected to the first board using the board joining connector. Thus, by replacing the second board with a type of board suitable in a delivery destination of the wireless communication device, the wireless communication device that meets specifications of the delivery destination can be manufactured without difficulty.

A shield case that houses an electric power supply circuit, a logic circuit, and at least one of the electric power supply circuit and the logic circuit therein may be further mounted on the first board; the shield case may have a contour including an interior angle larger than 180 degrees in plan view of the first board; an opening may be formed at a side surface corresponding to the interior angle of the shield case; and each of the first communication circuit, the first antenna, the second communication circuit, and the second antenna may be arranged on the first board at such a location that is out of sight when viewed outside through the opening from inside the shield case.

Because of this, despite the presence of the opening in the shield case introduced for downsizing and increasing the level of integration, stable communication is obtained because the first communication circuit and the first antenna and the second communication circuit and the second antenna are placed at locations where the first communication circuit and the first antenna and the second communication circuit and the second antenna are less likely to come under the influence of the electromagnetic wave noise leaked from the opening.

The first antenna and the second antenna may be arranged along a side of the first board in plan view of the first board; an external device connector for connecting the wireless communication device and an external device may further be mounted on the first board, the external device being placed outside the housing and performing wireless communication based on a wireless communication system that is different from both the first wireless communication system and the second wireless communication system; and the external device connector may be arranged along a side of the first board that is different from both the side of the first board along which the first antenna is arranged and the side of the first board along which the second antenna is arranged.

Because of this, the external device connector, which is for connecting with an external device that performs wireless communication based on a wireless communication system different from the wireless communication systems employed in the wireless communication device, is placed at the location where interference with the wireless communication using the first antenna and interference the wireless communication using the second antenna are less likely to occur, thereby enabling stable wireless communication using the external device added by use of the external device connector.

### Advantageous Effects of Invention

The present invention enables the realization of the wireless communication device capable of performing smooth wireless communication based on a plurality of different wireless communication systems simultaneously, which use the same frequency band.

### Brief Description of Drawings

[Fig. 1] Fig. 1 is a diagram illustrating an application example of a wireless communication device according to an embodiment.
[Fig. 2] Fig. 2 is a mounting layout diagram illustrating a configuration of the wireless communication device illustrated in Fig. 1.
[Fig. 3] Fig. 3 is a block diagram illustrating a connection relationship between various circuit elements illustrated in Fig. 2.
[Fig. 4] Fig. 4 is a diagram illustrating one example of a development diagram of a shield case illustrated in Fig. 1.
[Fig. 5] Fig. 5 is a mounting layout diagram illustrating a configuration of a wireless communication device according to a modified example of an embodiment.
[Fig. 6] Fig. 6 is a block diagram illustrating a connection relationship between various circuit elements illustrated in Fig. 5.
[Fig. 7] Fig. 7 is a diagram illustrating a mounting example of a communication circuit and an antenna in a first board having an L-shape.

### Description of Embodiments

Hereinafter, embodiments of the present invention will be described in detail with reference to the drawings. Note that embodiments which will be described below each illustrate a specific example of the present invention. Numeric values, frequency bands, wireless communication systems, shapes, materials, constituting elements, arrangement locations and connection modes of the constituting elements, processing procedures, and the like are mere examples, and not intended to limit the present invention. Of constituting elements in the following embodiments, the constituting elements that are not described in the independent claim representing the broadest concept of the present invention will be described as optional constituting elements.

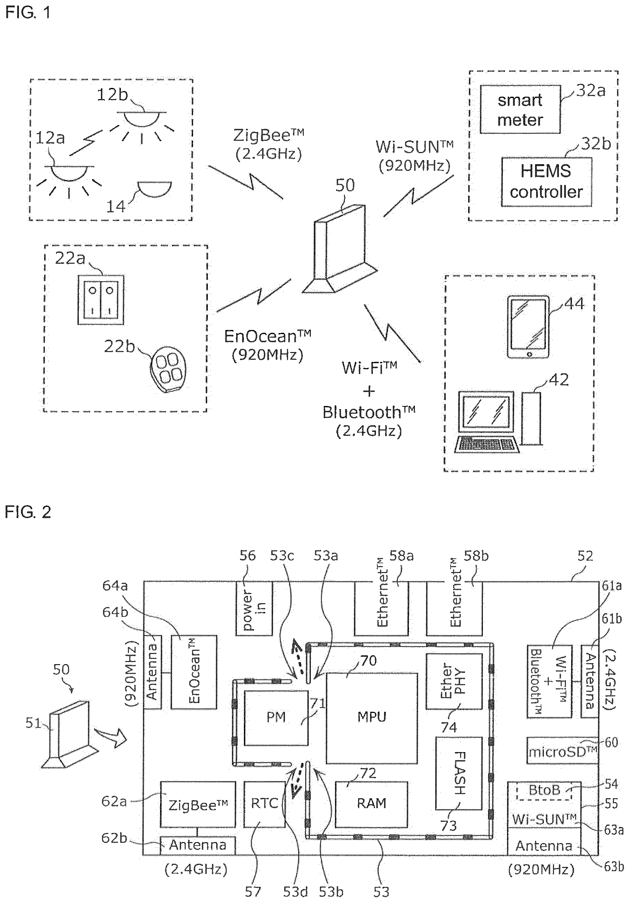

Fig. 1 is a diagram illustrating an application example of a wireless communication device 50 according to an embodiment. Here, the wireless communication device 50 is illustrated as a device that functions as a gateway that uses wireless communication based on the total of four types of wireless communication systems together and also as a device controller for controlling various devices, the four types of wireless communication systems including wireless LAN (Wi-Fi (Registered trademark)) and Bluetooth (Registered trademark) that can be selectively used and are examples of a first wireless communication system that uses the 2.4 GHz band, which corresponds to a first frequency band, ZigBee (Registered trademark) that is an example of a second wireless communication system that uses the 2.4 GHz band, which corresponds to the same first frequency band, Wi-SUN (Registered trademark) that is an example of a third wireless communication system that uses the 920 MHz band, which corresponds to a second frequency band, and EnOcean (Registered trademark) that is an example of a fourth wireless communication system that uses the 920 MHz band, which corresponds to the same second frequency band.

Specifically, lighting apparatuses 12a and 12b form a ZigBee (Registered trademark) mesh network, and the wireless communication device 50 functions as a coordinator thereof. Battery-operated illuminance sensors 14 are installed at many indoor locations, and their data are also aggregated at the wireless communication device 50 via the ZigBee (Registered trademark) mesh network.

Light switches 22a and 22b that use an energy harvesting power supply by EnOcean (Registered trademark) are installed inside a room, and transmission data from these light switches 22a and 22b are received with the wireless communication device 50.

A smart meter 32a and a Home Energy Management System (HEMS) controller 32b are connected to the wireless communication device 50 based on Wi-SUN (Registered trademark), and the wireless communication device 50 continuously monitors electric power usage and transmits demand-response information such as shortage of electric power supply or the like via B route or the like. The wireless communication device 50 performs, based on this demand-response information, an energy saving control such as turning off indoor lighting at a location where a motion sensor outputs no response.

A smartphone 44 and the wireless communication device 50 are connected to each other based on Bluetooth (Registered trademark), and this enables the smartphone 44 to control lighting using a lighting control application. Further, a personal computer (PC) 42 and the smartphone 44 can access a setup screen (Web control) of the wireless communication device 50 based on Wi-Fi (Registered trademark) to set the lighting control or check usage thereof.

Fig. 2 is a diagram illustrating the configuration of the wireless communication device 50 illustrated in Fig. 1. Here, a mounting layout of circuit boards (first board 52 and second board 55) placed inside a housing 51 included in the wireless communication device 50 is illustrated.

On the first board 52, as four sets of communication circuits and antennas, a first communication circuit 61a and a first antenna 61b that perform wireless communication based on Wi-Fi (Registered trademark) and Bluetooth (Registered trademark) that can be used selectively and both use the 2.4 GHz band, a second communication circuit 62a and a second antenna 62b that perform wireless communication based on ZigBee (Registered trademark) that uses the 2.4 GHz band, a third communication circuit 63a and a third antenna 63b that perform wireless communication based on Wi-SUN (Registered trademark) that uses the 920 MHz band, and a fourth communication circuit 64a and a fourth antenna 64b that perform wireless communication based on EnOcean (Registered trademark) that uses the 920 MHz band are mounted. Here, the first communication circuit 61a is a combo chip compatible with wireless communication systems of Wi-Fi (Registered trademark) and Bluetooth (Registered trademark), which use a single band of the 2.4 GHz band. The third communication circuit 63a and the third antenna 63b are placed on the second board 55, which serves as a sub board and is connected to the first board 52, which serves as a main board, using a board joining connector (B to B) 54. Note that the first antenna 61b, the second antenna 62b, the third antenna 63b, and the fourth antenna 64b may be wiring patterns formed on a principal surface (namely, a surface on which circuit components are mounted) of the first board 52 or the second board 55, or conductors formed so as to stand up from the board, or mixtures of the wiring pattern and the conductor. The first board 52 has a rectangular contour in the present embodiment. However, the shape is not limited only to such contour as described below.

On the first board 52, as logic circuits, a micro-processing unit (MPU) 70, a RAM 72, a flash memory 73, an ethernet (Registered trademark) IC (Ether PHY) 74, and a real time clock (RTC) 57 are mounted, and as an electric power supply circuit, an electric power management IC (PM) 71 is mounted. Here, the MPU 70, the electric power management IC 71, the RAM 72, the Flash memory 73, and the ethernet (Registered trademark) IC 74 are placed inside the shield case 53 having a lidded structure to suppress unwanted electromagnetic wave noise toward communication circuits in the surrounding area. Details of the shield case 53 will be described below.

Further, on the first board 52, as connectors of various types for connecting to an electric power supply or an external device, an electric power supply terminal (power in) 56, an ethernet (Registered trademark) ports 58a and 58b, and a microSD (Registered trademark) 60 are mounted.

Note that, in the present specification, "mounted (or placed) on a board" means not only a case where a component is directly mounted (or placed) on the board, but also includes a case where a component is indirectly mounted (or placed) on the board using another component such as the board joining connector 54 or the like.

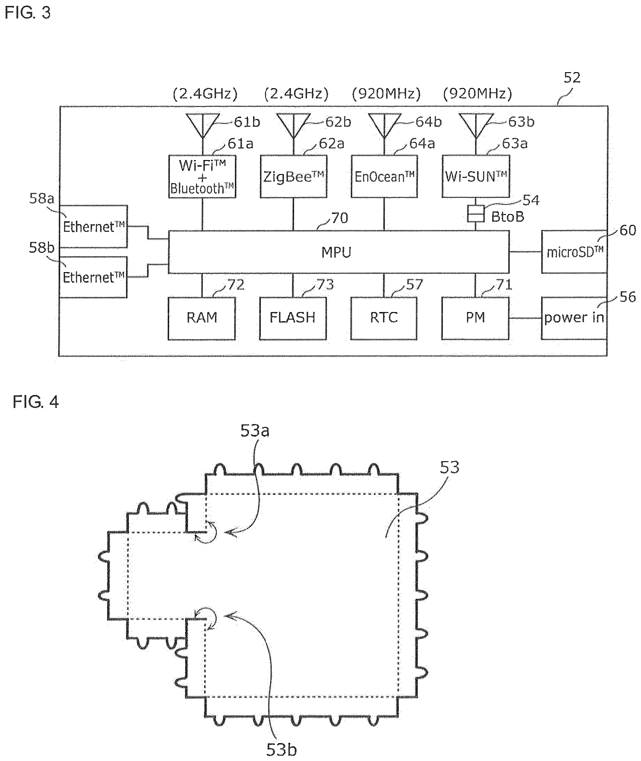

Fig. 3 is a block diagram illustrating a connection relationship between various circuit elements mounted on the first board 52 and the second board 55 illustrated in Fig. 2. As illustrated in the drawing, the first communication circuit 61a, the second communication circuit 62a, the fourth communication circuit 64a, the ethernet (Registered trademark) ports 58a and 58b, the RAM 72, the flash memory 73, the real time clock 57, the electric power management IC 71, and the microSD (Registered trademark) 60 are connected to the MPU 70, and the third communication circuit 63a is connected to the MPU 70 using the board joining connector 54.

The electric power management IC 71 receives an externally-supplied DC electric power via the electric power supply terminal 56, generates DC voltages of various types required in the wireless communication device 50 at appropriate timings, and supplies the generated DC voltages to circuit elements of various types. The ethernet (Registered trademark) ports 58a and 58b are used as WAN ports for connecting with the internet outside or LAN ports forming a home network, or are used as LAN HUB.

The MPU 70 includes a ROM in which a control program is stored, a processor that executes the control program, and the like. When the processor executes the control program, the processor sends and receives data and control signals to and from circuit elements of various types connected to the MPU 70, thereby making the wireless communication device 50 function as the gateway and the device controller illustrated in Fig. 1.

The w.ireless communication device 50 in the present embodiment configured as described above has the following characteristic features.

The first antenna 61b for Wi-Fi (Registered trademark) and Bluetooth (Registered trademark) that use the 2.4 GHz band and the the second antenna 62b for ZigBee (Registered trademark) that uses the same 2.4 GHz are placed in a first region and a second region of the first board 52, respectively, wherein the first region and the second region are in a diagonal spatial relationship in plan view of the first board 52. In the present embodiment, as illustrated in Fig. 2, the first antenna 61b is placed in an upper right region (first region) of the first board 52 whereas the second antenna 62b is placed in a lower left region (second region) of the first board 52.

Because of this, the first antenna 61b and the second antenna 62b, which are compatible with a plurality of different wireless communication systems that use the same frequency band, are placed at locations separate from each other. Accordingly, radio wave interference between the wireless communication by Wi-Fi (Registered trademark) and Bluetooth (Registered trademark) that use the first antenna 61b and the wireless communication by ZigBee (Registered trademark) that uses the second antenna 62b is suppressed. As a result, it becomes possible to perform smooth wireless communication based on the plurality of different wireless communication systems (Wi-Fi (Registered trademark) and Bluetooth (Registered trademark) and ZigBee (Registered trademark)) simultaneously, which use the same frequency band. Because of the suppression of radio wave interference, the first board 52 can be made smaller in size compared with that of the prior art, thereby making it possible to make the wireless communication device 50 smaller in size and higher in integration level. Further, because of the suppression of radio wave interference, the retransmission rate during wireless communication caused by the interference is also suppressed, thereby reducing electric power consumption associated with the retransmission.

The same thing as with the first antenna 61b and the second antenna 62b can be said with the third antenna 63b and the fourth antenna 64b. In other words, the third antenna 63b for Wi-SUN (Registered trademark) that uses the 920 MHz band and the the fourth antenna 64b for EnOcean (Registered trademark) that uses the same 920 MHz are placed in a third region and a fourth region, respectively, wherein the third region and the fourth region are each different from both the first region and the second region and are in the diagonal spatial relationship in plan view of the first board 52. In the present embodiment, as illustrated in Fig. 2, the third antenna 63b is placed in a lower right region (third region) of the first board 52 whereas the fourth antenna 64b is placed in an upper left region (fourth region) of the first board 52.

Because of this, the third antenna 63b and the fourth antenna 64b, which are compatible with a plurality of different wireless communication systems that use the same frequency band, are placed at separate locations from each other, as with the first antenna 61b and the second antenna 62b. Accordingly, radio wave interference between the wireless communication by Wi-SUN (Registered trademark) that uses the third antenna 63b and the wireless communication by EnOcean (Registered trademark) that uses the fourth antenna 64b is suppressed. As a result, it becomes possible to perform smooth wireless communication based cn the plurality of different wireless communication systems (Wi-SUN (Registered trademark) and EnOcean (Registered trademark)) simultaneously, which use the same frequency band. Because of the suppression of radio wave interference, the first board 52 can be made smaller in size compared with that of the prior art, thereby making it possible to make the wireless communication device 50 smaller in size and higher in integration level. Further, because of the suppression of radio wave interference, the retransmission rate during wireless communication caused by the interference is also suppressed, thereby reducing electric power consumption associated with the retransmission.

Note that in the present specification "two regions that are in a diagonal spatial relationship" may be, in plan view of the first board 52, regions within a predetermined range (for example, a distance corresponding to 10% of the diagonal line) from respective ones of two vertices of the first board 52 that are in the diagonal spatial relationship, or may means that, of the antennas mounted on the first board 52, antennas are placed at locations closest to respective ones of these two vertices, or may be regions along the sides of the first board 52 that are connected to respective ones of these two vertices.

The first antenna 61b for Wi-Fi (Registered trademark) and Bluetooth (Registered trademark) that use the 2.4 GHz band and the the second antenna 62b for ZigBee (Registered trademark) that uses the same 2.4 GHz are arranged on the first board 52 in such a way that principal radiation directions thereof are orthogonal to each other. In the present embodiment, as illustrated in Fig. 2, the first antenna 61b is placed in such a manner as to extend along the right-hand side of the first board 52 having a rectangle contour whereas the second antenna 62b is placed in such a manner as to extend along the bottom side of the first board 52. As a result, principal radiation directions of the first antenna 61b and the second antenna 62b are orthogonal to each other.

Because of this, the principal radiation direction of the first antenna 61b and the principal radiation direction of the second antenna 62b that use the same frequency band are orthogonal to each other, and the radio wave interference between the wireless communication by Wi-Fi (Registered trademark) and Bluetooth (Registered trademark) that use the first antenna 61b and the wireless communication by ZigBee (Registered trademark) that uses the second antenna 62b is further suppressed, thereby realizing the wireless communication device 50 having good reception.

The same thing as with the first antenna 61b and the second antenna 62b can be said with the third antenna 63b and the fourth antenna 64b. In other words, the third antenna 63b for Wi-SUN (Registered trademark) that uses the 920 MHz band and the the fourth antenna 64b for EnOcean (Registered trademark) that uses the same 920 MHz are arranged on the first board 52 in such a way that principal radiation directions thereof are orthogonal to each other. In the present embodiment, as illustrated in Fig. 2, the third antenna 63b is placed in such a manner as to extend along the bottom side of the first board 52 having a rectangle contour whereas the fourth antenna 64b is placed in such a manner as to extend along the left-hand side of the first board 52. As a result, principal radiation directions of the third antenna 63b and the fourth antenna 64b are orthogonal to each other.

Because of this, as with the first antenna 61b and the second antenna 62b, the principal radiation direction of the third antenna 63b and the principal radiation direction of the fourth antenna 64b that use the same frequency band are orthogonal to each other, and the radio wave interference between the wireless communication by Wi-SUN (Registered trademark) that uses the third antenna 63b and the wireless communication by EnOcean (Registered trademark) that uses the fourth antenna 64b is further suppressed, thereby realizing the wireless communication device 50 having good reception.

Note that, in the present specification, "orthogonal" refers to a state where directions are substantively orthogonal to the extent that the suppression of radio wave interference is effective, and also includes a state where directions cross at an angle of 80 to 100 degrees, for example.

A communication circuit and an antenna (in this case, the third communication circuit 63a and the third antenna 63b that perform wireless communication by Wi-SUN (Registered trademark) that uses the 920 MHz band) mounted at a location closest to the the first communication circuit 61a and the first antenna 61b are placed on a second plane (in this case, the principal surface of the second board 55) whose height from the first board 52 is different from that of a first plane (in this case, the principal surface of the first board 52) on which the first communication circuit 61a and the first antenna 61b are mounted, wherein the first communication circuit 61a and the first antenna 61b perform wireless communication by Wi-Fi (Registered trademark), which use the widest frequency band in the communication circuits and antennas mounted on the first board 52 or perform most frequent wireless communication in the communication circuits and antennas mounted on the first board 52. In other words, the third communication circuit 63a and the third antenna 63b that perform wireless communication by Wi-SUN (Registered trademark) that uses the 920 MHz band are not on-board mounted on the first board 52, but are mounted as a built-in antenna module (module including the second board 55) to be connected to the first board 52 using the board joining connector 54.

Wi-Fi (Registered trademark) and Wi-SUN (Registered trademark) use different frequency band. However, since communication by Wi-Fi (Registered trademark) uses large bandwidth and is performed highly frequently, there is a possibility of causing out-of-band interference at a communication circuit and an antenna placed close to the first communication circuit 61a and the first antenna 61b that perform wireless communication by Wi-Fi (Registered trademark) on the first board 52. Accordingly, in the present embodiment, the first communication circuit 61a and the first antenna 61b and the third communication circuit 63a and the third antenna 63b, which are mounted at a location closest to the first communication circuit 61a and the first antenna 61b, are placed at the planes of different heights. Accordingly, compared with a case where the first communication circuit 61a and the first antenna 61b and the third communication circuit 63a and the third antenna 63b are placed on the same plane, out-of-band radio wave interference between the wireless communication using the first communication circuit 61a and the first antenna 61b (namely, wireless communication by Wi-Fi (Registered trademark) and Bluetooth (Registered trademark) that use the 2.4 GHz band) and the wireless communication using the third communication circuit 63a and the third antenna 63b (namely, wireless communication by Wi-SUN (Registered trademark) that uses the 920 MHz band) is suppressed.

The first communication circuit 61a and the first antenna 61b and the third communication circuit 63a and the third antenna 63b are placed on different boards, which are connected using the board joining connector 54, and these boards are detachable. Thus, a combination of boards to be used together can be changed easily, thereby making it possible to flexibly meet various needs.

On the first board 52, the shield case 53 that houses at least one of the electric power supply circuit and the logic circuits therein is mounted. The shield case 53 has a contour including interior angles 53a and 53b larger than 180 degrees in plan view of the first board 52, and openings 53c and 53d are formed at side surfaces corresponding to the interior angles 53a and 53b of the shield case 53, respectively. The first communication circuit 61a and the first antenna 61b, the second communication circuit 62a and the second antenna 62b, the third communication circuit 63a and the third antenna 63b, and the fourth communication circuit 64a and the fourth antenna 64b are each placed on the first board 52 at such a location that is out of sight when viewed outside through the opening 53c or 53d from inside the shield case 53. Here, "out of sight" when viewed outside from inside the shield case 53 means the spatial relationship such that the communication circuits and the antennas do not receive direct radiation of electromagnetic wave noise leaked from the opening 53c or 53d, and also includes cases where other circuit components are present between the openings 53c and 53d and the communication circuits and the antennas.

Specifically, the shield case 53 is molded from a solid plate of nickel silver or the like by use of inexpensive punching and bending processing, as illustrated in a development diagram illustrated in Fig. 4. The shield case 53 is fixed by soldering after inserting its nail portions into through holes formed in the first board 52 while covering the logic circuits such as the MPU 70, the electric power management IC 71, the RAM 72, the Flash memory 73, and the ethernet (Registered trademark) IC 74. Here, the shield case 53 has a protruded plane shape (namely, the interior angles 53a and 53b larger than 180 degrees are present in the contour in plan view), and therefore, partial gaps (openings 53c and 53d) are formed at the side surfaces of inner side corners (see Fig. 2). In the present embodiment, the openings 53c and 53d are directed to (open toward) the electric power supply terminal 56 and the real time clock 57. This suppresses, at each of four types of communication circuits and antennas, direct radiation of electromagnetic wave noise leaked from the openings 53c and 53d.

Because of this, despite the presence of the openings in the shield case 53 introduced for downsizing and increasing the level of integration, stable communication is obtained because all the communication circuits and the antennas are placed at locations where the communication circuit and the antenna are less likely to come under the influence of the electromagnetic wave noise leaked from the openings.

### (Modified Example)

Next, a wireless communication device 50a according to a modified example of the foregoing embodiment is described.

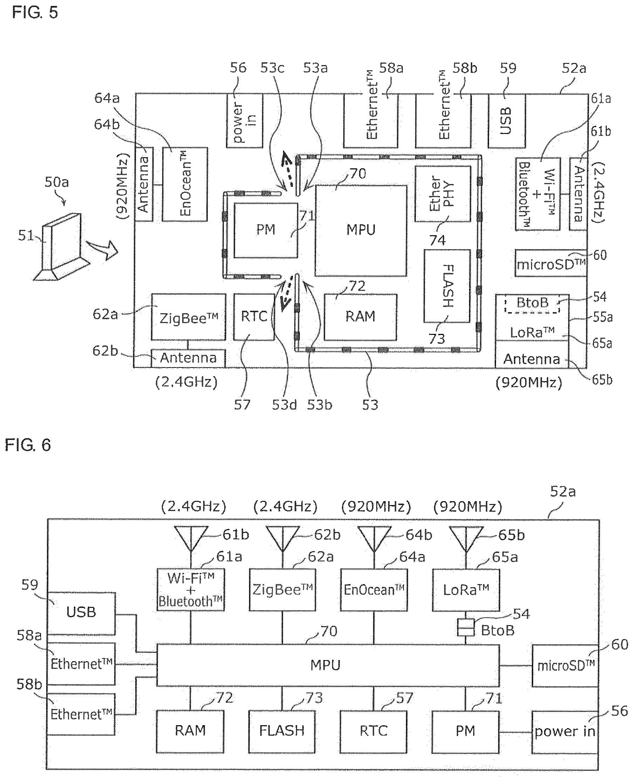

Fig. 5 is a diagram illustrating a configuration of the wireless communication device 50a according to the modified example of the embodiment. Here, the mounting layout of circuit boards (first board 52a and second board 55a) placed inside the housing 51 of the wireless communication device 50a is illustrated. Fig. 6 is a block diagram illustrating a connection relationship between various circuit elements mounted on the first board 52a and the second board 55a illustrated in Fig. 5.

In the present modified example, unlike the foregoing embodiment, a USB port 59 is mounted on the first board 52a, and on the second board 55a, a different third communication circuit 65a and third antenna 65b compatible with wireless communication system LoRa (Registered trademark) are mounted in place of Wi-SUN (Registered trademark), which serves as the third wireless communication system in the foregoing embodiment. In the following description, constituting elements identical to those in the foregoing embodiment are given the same reference numerals, and their descriptions are omitted. Descriptions regarding constituting elements different from the foregoing embodiment are provided below.

The USB port 59 is placed outside the housing 51 and is one example of an external device connector for connecting the wireless communication device 50a and an external device (namely, a communication circuit and an antenna) that performs wireless communication based on a wireless communication system different from any of the wireless communication systems (first wireless communication system (Wi-Fi (Registered trademark) and Bluetooth (Registered trademark)), second wireless communication system (ZigBee (Registered trademark)), third wireless communication system (LoRa (Registered trademark)), and fourth wireless communication system (EnOcean (Registered trademark))) used by the wireless communication device 50a. External devices to be connected to the USB port 59 include a 3G/LTE dongle, for example. Because of this, it becomes possible to perform wireless communication based on a newly added wireless communication system that is different from the wireless communication systems employed in the wireless communication device 50a.

Here, as illustrated in Fig. 5, the USB port 59 is placed along a side of the first board 52a (namely, the upper side) that is different from any sides of the first board 52a along which the antennas included in the wireless communication device 50a are placed (namely, the right-hand side of the first board 52a along which the first antenna 61b is placed, the bottom side of the first board 52a along which the second antenna 62b is placed, the bottom side of the first board 52a along which the third antenna 65b is placed, and the left-hand side of the first board 52a along which the fourth antenna 64b is placed).

Because of this, the USB port 59, which is for connecting with an external device (for example, 3G/LTE dongle) that performs wireless communication based on the wireless communication system that is different from the wireless communication systems employed in the wireless communication device 50a, is placed at the location where interference with wireless communication using any of the four antennas included in the wireless communication device 50a is less likely to occur, thereby enabling stable wireless communication by the external device that is added using the USB port 59.

Note that the communication circuit and the antenna (external devices) to be added is not limited to a dongle by USB and may be a card or the like, which is connected to its own unique connector, Secure Digital Input/Output (SDIO), or the like.

On the second board 55a of the present modified example, the third communication circuit 65a and the third antenna 65b that perform wireless communication based on LoRa (Registered trademark), which is another example of the third wireless communication system that uses the 920 MHz band, are mounted so as to be compatible in the delivery destination where LoRa (Registered trademark) is employed as a wireless communication system in smart grid.

In this way, the second board 55a on which the third communication circuit 65a and the third antenna 65b are placed is connected to the first board 52a using the board joining connector 54. Thus, by replacing the second board 55a with a type of board suitable in the delivery destination of the wireless communication device 50a, the wireless communication device 50a that meets specifications of the delivery destination can be manufactured without difficulty.

Note that, depending on the delivery destination of the wireless communication device 50a, a communication circuit and an antenna that perform wireless communication based on Sigfox (Registered trademark), which is another example of the third wireless communication system that uses the 800/900 MHz band, may be mounted as the communication circuit and the antenna mounted on the second board 55a.

Thus far, the wireless communication devices of the present invention are described based on the embodiments and modified examples. However, the present invention is not limited to these embodiments and the modified examples. Embodiments obtained by applying various modifications apparent to those skilled in the art to the embodiments and the modified examples and different embodiments formed by combining parts of constituting elements of the embodiments and the modified examples are included in the scope of the present invention so long as they do not depart from the gist of the present invention.

For example, in the embodiments and the modified examples described above, a plurality of different wireless communication systems is employed for each of two frequency bands (2.4 GHz band and 800/900 MHz band). However, embodiments are not limited to such combinations and only need to employ a plurality of different wireless communication systems in at least one of frequency bands. For example, two different wireless communication systems that use the 2.4 GHz band may be employed, or two different wireless communication systems that use the 2.4 GHz band and one wireless communication system that uses the 800/900 MHz band may be employed.

Further, the frequency bands to be used in wireless communication are not limited to the 2.4 GHz band and the 800/900 MHz band, and a different frequency band such as the 5 GHz band or the like may also be used. For example, the first communication circuit 61a and the first antenna 61b may be compatible with Wi-Fi (Registered trademark) that uses the 2.4 GHz band and the 5 GHz band and Bluetooth (Registered trademark) that uses the 2.4 GHz band.

In the embodiments and the modified examples described above, the shapes (plane shape) of the first boards 52 and 52a are rectangular. However, the shapes of the first boards 52 and 52a are not limited to such shape and may be various types of polygon such as a circle, an oval, a hexagon, and the like, an L-shape, a recessed shape, a protruded shape, a shape obtained by clipping part of these, or various types of different shapes obtained by combining these.

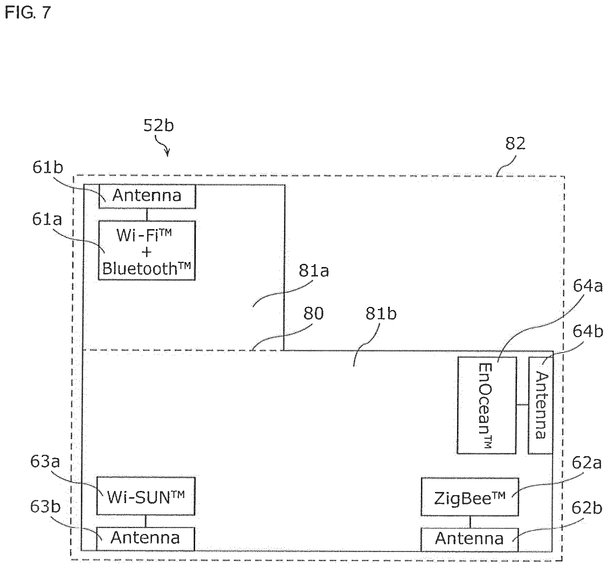

Fig. 7 is a diagram illustrating a mounting example of a communication circuit and an antenna in a first board 52b having an L-shape. In this drawing, for the sake of simplicity of illustration, only mounting locations of four sets of communication circuits and antennas (first communication circuit 61a and first antenna 61b, second communication circuit 62a and second antenna 62b, third communication circuit 63a and third antenna 63b, fourth communication circuit 64a and fourth antenna 64b) are illustrated.

Even in this case, it can be said that the first antenna 61b and the second antenna 62b are respectively placed in the first region and the second region that are in the diagonal spatial relationship in plan view of the first board 52b. This is because the first antenna 61b and the second antenna 62b are placed in the regions that are in the diagonal spatial relationship in a circumscribed rectangular region 82 of this L-shaped first board 52b.

It can be said that the third antenna 63b and the fourth antenna 64b are also respectively placed in the third region and the fourth region that are in the diagonal spatial relationship in plan view of the first board 52b. This is because the third antenna 63b and the fourth antenna 64b are placed in the regions that are in the diagonal spatial relationship in one (rectangular region 81b) of two rectangular regions 81a and 81b obtained by dividing this L-shaped first board 52b with a partition line 80.

In this way, "regions that are in the diagonal spatial relationship in plan view of the first board" include not only the regions that are in the diagonal spatial relationship when the first board is a rectangular shape, but also include the regions that are in the diagonal spatial relationship in the circumscribed rectangular region of the first board, and the regions that are in the diagonal spatial relationship in the rectangular region obtained by dividing the first board into a plurality of rectangular regions.

Note that, according to the first board 52b illustrated in Fig. 7, the first communication circuit 61a and the first antenna 61b are mounted on the rectangular region 81a that is different from the rectangular region 81b on which other three types of the communication circuits and the antennas are mounted, wherein the first communication circuit 61a and the first antenna 61b perform wireless communication by Wi-Fi (Registered trademark), which use the widest frequency band in the communication circuits and antennas mounted on the first board 52b or perform most frequent communication in the communication circuits and antennas mounted on the first board 52b. Because of this, in-band interference and out-of-band interference between the first communication circuit 61a and the first antenna 61b, which perform wireless communication using large bandwidth or perform wireless communication highly frequently, and the other three types of communication circuits and antennas are suppressed.

### Industrial Applicability

The present invention can be used as wireless communication devices or more specifically as devices that perform wireless communication based on a plurality of different wireless communication systems that use the same frequency band, and, for example, as a gateway or a device controller that controls devices by performing wireless communication with various devices such as a lighting apparatus, an illuminance sensor, a light switch, a smart meter, a smartphone, a PC, and the like.

### Reference Signs List

12a, 12b Lighting apparatus
14 Illuminance sensor
22a, 22b Light switch
32a Smart meter
32b HEMS controller
42 Personal computer (PC)
44 Smartphone
50, 50a Wireless communication device
51 Housing
52, 52a, 52b First board
53 Shield case
53a, 53b Interior angle larger than 180 degrees
53c, 53d Opening
54 Board joining connector
55, 55a Second board
56 Electric power supply terminal
57 Real time clock
58a, 58b Ethernet (Registered trademark) port
59 USB port
60 microSD (Registered trademark)
61a First communication circuit
61b First antenna
62a Second communication circuit
62b Second antenna
63a, 65a Third communication circuit
63b, 65b Third antenna
64a Fourth communication circuit
64b Fourth antenna
70 MPU
71 Electric power management IC
72 RAM
73 Flash memory
74 Ethernet (Registered trademark) IC
80 Partition line
81a, 81b Rectangular region
82 Circumscribed rectangular region

## Claims

1. A wireless communication device comprising:
a housing (51); and
a first board (52, 52a, 52b) placed inside the housing (51), wherein
a first communication circuit (61a) and a first antenna (61b) that perform wireless communication based on a first wireless communication system that uses a first frequency band and a second communication circuit (62a) and a second antenna (62b) that perform wireless communication based on a second wireless communication system that uses the first frequency band are mounted on the first board (52, 52a, 52b), the second wireless communication system being different from the first wireless communication system, and
the first antenna (61b) and the second antenna (62b) are respectively placed in a first region and a second region that are in a diagonal spatial relationship in plan view of the first board (52, 52a, 52b),
**characterized in that**
the first antenna (61b) and the second antenna (62b) are arranged on the first board (52, 52a, 52b) in such a way that principal radiation directions of the first antenna (61b) and the second antenna (62b) are orthogonal to each other.

2. The wireless communication device according to claim 1, wherein
a third communication circuit (63a, 65a) and a third antenna (63b, 65b) that perform wireless communication based on a third wireless communication system that uses a second frequency band, the second frequency band being different from the first frequency band, and a fourth communication circuit (64a) and a fourth antenna (64b) that perform wireless communication based on a fourth wireless communication system that uses the second frequency band, the fourth wireless communication system being different from the third wireless communication system, are further mounted on the first board (52, 52a, 52b), and
the third antenna (63b, 65b) and the fourth antenna (64b) are respectively arranged in a third region and a fourth region that are in a diagonal spatial relationship in plan view of the first board (52, 52a, 52b), each of the third region and the fourth region being different from both the first region and the second region.

3. The wireless communication device according to claim 2, wherein
the third antenna (63b, 65b) and the fourth antenna (64b) are arranged on the first board (52, 52a, 52b) in such a way that principal radiation directions of the third antenna (63b, 65b) and the fourth antenna (64b) are orthogonal to each other.

4. The wireless communication device according to claim 2 or 3, wherein
of communication circuits and antennas mounted on the first board (52, 52a, 52b), the first communication circuit (61a) and the first antenna (61b) perform communication using a widest frequency band or perform most frequent communication, and
of the communication circuits and the antennas mounted on the first board (52, 52a, 52b), the third communication circuit (63a, 65a) and the third antenna (63b, 65b) are mounted at a location closest to the first communication circuit (61a) and the first antenna (61b) and arranged on a second plane whose height from the first board (52, 52a, 52b) is different from that of a first plane on which the first communication circuit (61a) and the first antenna (61b) are mounted.

5. The wireless communication device according to claim 4, wherein
the first plane is a principal surface of the first board (52, 52a, 52b), and
the second plane is a principal surface of the second board connected to the first board (52, 52a, 52b) using a board joining connector.

6. The wireless communication device according to claim 5, wherein
the third wireless communication system is a wireless communication system of a type in which a frequency band to be used or a wireless communication system to be used or both are different depending on a delivery destination of the wireless communication device.

7. The wireless communication device according to claim 1, comprising
an electric power supply circuit, a logic circuit, and a shield case (53) that houses at least one of the electric power supply circuit and the logic circuit therein, each of which is further mounted on the first board (52, 52a, 52b), wherein
the shield case (53) has a contour including an interior angle (53a, 53b) larger than 180 degrees in plan view of the first board (52, 52a, 52b),
an opening (53c, 53d) is formed at a side surface corresponding to the interior angle (53a, 53b) of the shield case (53), and
each of the first communication circuit (61a), the first antenna (61b), the second communication circuit (62a), and the second antenna (62b) is arranged on the first board (52, 52a, 52b) at such a location that is out of sight when viewed outside through the opening (53c, 53d) from inside of the shield case (53).

8. The wireless communication device according to claim 1, wherein
the first antenna (61b) and the second antenna (62b) are arranged along a side of the first board (52, 52a, 52b) in plan view of the first board (52, 52a, 52b),
an external device connector for connecting the wireless communication device and an external device is further mounted on the first board (52, 52a, 52b), the external device being placed outside the housing (51) and performing wireless communication based on a wireless communication system that is different from both the first wireless communication system and the second wireless communication system, and
the external device connector is arranged along a side of the first board (52, 52a, 52b) that is different from both the side of the first board (52, 52a, 52b) along which the first antenna (61b) is arranged and the side of the first board (52, 52a, 52b) along which the second antenna (62b) is arranged.

## Patentansprüche

1. Ein drahtloses Kommunikationsgerät mit folgenden Merkmalen:
einem Gehäuse (51); und
einer ersten Platine (52, 52a, 52b), die in dem Gehäuse (51) platziert ist, wobei
eine erste Kommunikationsschaltung (61a) und eine erste Antenne (61b), die eine drahtlose Kommunikation basierend auf einem ersten drahtlosen Kommunikationssystem, das ein erstes Frequenzband verwendet, durchführen, und eine zweite Kommunikationsschaltung (62a) und eine zweite Antenne (62b), die eine drahtlose Kommunikation basierend auf einem zweiten drahtlosen Kommunikationssystem, das das erste Frequenzband verwendet, durchführen, auf der ersten Platine (52, 52a, 52b) befestigt sind, wobei sich das zweite drahtlose Kommunikationssystem von dem ersten drahtlosen Kommunikationssystem unterscheidet, und
die erste Antenne (61b) und die zweite Antenne (62b) in einer ersten Region bzw. einer zweiten Region platziert sind, die sich in einer diagonalen räumlichen Beziehung in Draufsicht auf die erste Platine (52, 52a, 52b) befinden,
**dadurch gekennzeichnet, dass**
die erste Antenne (61b) und die zweite Antenne (62b) auf eine solche Weise auf der ersten Platine (52, 52a, 52b) angeordnet sind, dass Hauptstrahlungsrichtungen der ersten Antenne (61b) und der zweiten Antenne (62b) senkrecht zueinander sind.

2. Das drahtlose Kommunikationsgerät gemäß Anspruch 1, bei dem
eine dritte Kommunikationsschaltung (63a, 65a) und eine dritte Antenne (63b, 65b), die eine drahtlose Kommunikation basierend auf einem dritten drahtlosen Kommunikationssystem, das ein zweites Frequenzband verwendet, durchführen, wobei sich das zweite Frequenzband von dem ersten Frequenzband unterscheidet, und eine vierte Kommunikationsschaltung (64a) und eine vierte Antenne (64b), die eine drahtlose Kommunikation basierend auf einem vierten drahtlosen Kommunikationssystem, das das zweite Frequenzband verwendet, durchführen, ferner auf der ersten Platine (52, 52a, 52b) befestigt sind, wobei sich das vierte drahtlose Kommunikationssystem von dem dritten drahtlosen Kommunikationssystem unterscheidet, und
die dritte Antenne (63b, 65b) und die vierte Antenne (64b) in einer dritten Region bzw. einer vierten Region angeordnet sind, die sich in einer diagonalen räumlichen Beziehung in Draufsicht auf die erste Platine (52, 52a, 52b) befinden, wobei sich jede der dritten Region und der vierten Region von sowohl der ersten Region als auch der zweiten Region unterscheidet.

3. Das drahtlose Kommunikationsgerät gemäß Anspruch 2, bei dem
die dritte Antenne (63b, 65b) und die vierte Antenne (64b) auf der ersten Platine (52, 52a, 52b) auf eine solche Weise angeordnet sind, dass Hauptstrahlungsrichtungen der dritten Antenne (63b, 65b) und der vierten Antenne (64b) senkrecht zueinander sind.

4. Das drahtlose Kommunikationsgerät gemäß Anspruch 2 oder 3, bei dem
von Kommunikationsschaltungen und Antennen, die auf der ersten Platine (52, 52a, 52b) befestigt sind, die erste Kommunikationsschaltung (61a) und die erste Antenne (61b) eine Kommunikation unter Verwendung eines breitesten Frequenzbands durchführen oder eine häufigste Kommunikation durchführen, und
von Kommunikationsschaltungen und den Antennen, die auf der ersten Platine (52, 52a, 52b) befestigt sind, die dritte Kommunikationsschaltung (63a, 65a) und die dritte Antenne (63b, 65b) an einem nächsten Ort zu der ersten Kommunikationsschaltung (61a) und der ersten Antenne (61b) befestigt sind und auf einer zweiten Ebene angeordnet sind, deren Höhe von der ersten Platine (52, 52a, 52b) sich von einer ersten Ebene unterscheidet, auf der die erste Kommunikationsschaltung (61a) und die erste Antenne (61b) befestigt sind.

5. Das drahtlose Kommunikationsgerät gemäß Anspruch 4, bei dem die erste Ebene eine Hauptoberfläche der ersten Platine (52, 52a, 52b) ist, und die zweite Ebene eine Hauptoberfläche der zweiten Platine ist, die unter Verwendung eines Platinenverbindungs-Verbinders mit der ersten Platine (52, 52a, 52b) verbunden ist.

6. Das drahtlose Kommunikationsgerät gemäß Anspruch 5, bei dem
das dritte drahtlose Kommunikationssystem ein drahtloses Kommunikationssystem eines Typs ist, bei dem ein zu verwendendes Frequenzband oder ein zu verwendendes drahtloses Kommunikationssystem oder beide sich abhängig von einem Lieferort des drahtlosen Kommunikationsgeräts unterscheiden.

7. Das drahtlose Kommunikationsgerät gemäß Anspruch 1, mit
einer elektrischen Leistungsversorgungsschaltung, einer Logikschaltung und einem Abschirmungsgehäuse (53), das zumindest eine der elektrischen Leistungsversorgungsschaltung und der Logikschaltung darin häust, von denen jede ebenfalls auf der ersten Platine (52, 52a, 52b) befestigt ist, wobei
das Abschirmungsgehäuse (53) eine Kontur aufweist, die einen Innenwinkel (53a, 53b) größer als 180° in Draufsicht auf die erste Platine (52, 52a, 52b) aufweist,
eine Öffnung (53c, 53d) an einer Seitenoberfläche entsprechend dem Innenwinkel (53a, 53b) des Abschirmungsgehäuses (53) gebildet ist, und
jede der ersten Kommunikationsschaltung (61a), der ersten Antenne (61b), der zweiten Kommunikationsschaltung (62a) und der zweiten Antenne (62b) an einem solchen Ort auf der ersten Platine (52, 52a, 52b) angeordnet ist, der bei einer Betrachtung nach außen durch die Öffnung (53c, 53d) von innerhalb des Abschirmungsgehäuses (53) außer Sicht ist.

8. Das drahtlose Kommunikationsgerät gemäß Anspruch 1, bei dem
die erste Antenne (61b) und die zweite Antenne (62b) entlang einer Seite der ersten Platine (52, 52a, 52b) in Draufsicht auf die erste Platine (52, 52a, 52b) angeordnet sind,
ein externer Geräteverbinder zum Verbinden des drahtlosen Kommunikationsgeräts und eines externen Geräts ferner auf der ersten Platine (52, 52a, 52b) befestigt ist, wobei das externe Gerät außerhalb des Gehäuses (51) platziert ist und eine drahtlose Kommunikation basierend auf einem drahtlosen Kommunikationssystem durchführt, das sich von dem ersten drahtlosen Kommunikationssystem und dem zweiten drahtlosen Kommunikationssystem unterscheidet, und
der externe Geräteverbinder entlang einer Seite der ersten Platine (52, 52a, 52b) angeordnet ist, die sich von sowohl der Seite der ersten Platine (52, 52a, 52b), entlang der die erste Antenne (61b) angeordnet ist, als auch der Seite der ersten Platine (52, 52a, 52b), entlang der die zweite Antenne (62b) angeordnet ist, unterscheidet.

## Revendications

1. Dispositif de communication sans fil comprenant :
un logement (51) ; et
une première carte (52, 52a, 52b) placée à l'intérieur du logement (51), dans lequel
un premier circuit de communication (61a) et une première antenne (61b) qui effectuent une communication sans fil sur la base d'un premier système de communication sans fil qui utilise une première bande de fréquences et un deuxième circuit de communication (62a) et une deuxième antenne (62b) qui effectuent une communication sans fil sur la base d'un deuxième système de communication sans fil qui utilise la première bande de fréquences sont montés sur la première carte (52, 52a, 52b), le deuxième système de communication sans fil étant différent du premier système de communication sans fil, et
la première antenne (61b) et la deuxième antenne (62b) sont placées respectivement dans une première région et une deuxième région qui sont dans une relation spatiale diagonale dans une vue en plan de la première carte (52, 52a, 52b),
**caractérisé en ce que**
la première antenne (61b) et la deuxième antenne (62b) sont agencées sur la première carte (52, 52a, 52b) de telle sorte que des directions de rayonnement principales de la première antenne (61b) et de la deuxième antenne (62b) soient orthogonales l'une à l'autre.

2. Dispositif de communication sans fil selon la revendication 1, dans lequel
un troisième circuit de communication (63a, 65a) et une troisième antenne (63b, 65b) qui effectuent une communication sans fil sur la base d'un troisième système de communication sans fil qui utilise une deuxième bande de fréquences, la deuxième bande de fréquences étant différente de la première bande de fréquences, et un quatrième circuit de communication (64a) et une quatrième antenne (64b) qui effectuent une communication sans fil sur la base d'un quatrième système de communication sans fil qui utilise la deuxième bande de fréquences, le quatrième système de communication sans fil étant différent du troisième système de communication sans fil, sont en outre montés sur la première carte (52, 52a, 52b), et
la troisième antenne (63b, 65b) et la quatrième antenne (64b) sont agencées respectivement dans une troisième région et une quatrième région qui sont dans une relation spatiale diagonale dans une vue en plan de la première carte (52, 52a, 52b), chacune de la troisième région et de la quatrième région étant différente à la fois de la première région et de la deuxième région.

3. Dispositif de communication sans fil selon la revendication 2, dans lequel
la troisième antenne (63b, 65b) et la quatrième antenne (64b) sont agencées sur la première carte (52, 52a, 52b) de telle sorte que les directions de rayonnement principales de la troisième antenne (63b, 65b) et de la quatrième antenne (64b) soient orthogonales l'une à l'autre.

4. Dispositif de communication sans fil selon la revendication 2 ou 3, dans lequel
parmi les circuits de communication et les antennes montés sur la première carte (52, 52a, 52b), le premier circuit de communication (61a) et la première antenne (61b) effectuent une communication en utilisant une bande de fréquences la plus large ou effectuent une communication la plus fréquente, et
parmi les circuits de communication et les antennes montés sur la première carte (52, 52a, 52b), le troisième circuit de communication (63a, 65a) et la troisième antenne (63b, 65b) sont montés à un emplacement le plus proche du premier circuit de communication (61a) et de la première antenne (61b) et agencés sur un deuxième plan dont la hauteur depuis la première carte (52, 52a, 52b) est différente de celle d'un premier plan sur lequel le premier circuit de communication (61a) et la première antenne (61b) sont montés.

5. Dispositif de communication sans fil selon la revendication 4, dans lequel
le premier plan est une surface principale de la première carte (52, 52a, 52b), et
le deuxième plan est une surface principale de la deuxième carte connectée à la première carte (52, 52a, 52b) en utilisant un connecteur de jonction de carte.

6. Dispositif de communication sans fil selon la revendication 5, dans lequel
le troisième système de communication sans fil est un système de communication sans fil d'un type dans lequel une bande de fréquences à utiliser ou un système de communication sans fil à utiliser ou les deux sont différents en fonction d'une destination de livraison du dispositif de communication sans fil.

7. Dispositif de communication sans fil selon la revendication 1, comprenant
un circuit d'alimentation électrique, un circuit logique, et un boîtier de blindage (53) qui loge au moins l'un du circuit d'alimentation électrique et du circuit logique à l'intérieur, dont chacun est en outre monté sur la première carte (52, 52a, 52b), dans lequel
le boîtier de blindage (53) a un contour incluant un angle intérieur (53a, 53b) supérieur à 180 degrés dans une vue en plan de la première carte (52, 52a, 52b),
une ouverture (53c, 53d) est formée au niveau d'une surface latérale correspondant à l'angle intérieur (53a, 53b) du boîtier de blindage (53), et
chacun du premier circuit de communication (61a), de la première antenne (61b), du deuxième circuit de communication (62a), et de la deuxième antenne (62b) est agencé sur la première carte (52, 52a, 52b) à un emplacement tel qu'il est hors de vue lorsqu'il est vu de l'extérieur à travers l'ouverture (53c, 53d) depuis l'intérieur du boîtier de blindage (53).

8. Dispositif de communication sans fil selon la revendication 1, dans lequel
la première antenne (61b) et la deuxième antenne (62b) sont agencées le long d'un côté de la première carte (52, 52a, 52b) dans une vue en plan de la première carte (52, 52a, 52b),
un connecteur de dispositif externe pour connecter le dispositif de communication sans fil et un dispositif externe est en outre monté sur la première carte (52, 52a, 52b), le dispositif externe étant placé à l'extérieur du logement (51) et effectuant une communication sans fil sur la base d'un système de communication sans fil qui est différent à la fois du premier système de communication sans fil et du deuxième système de communication sans fil, et
le connecteur de dispositif externe est agencé le long d'un côté de la première carte (52, 52a, 52b) qui est différent à la fois du côté de la première carte (52, 52a, 52b) le long duquel la première antenne (61b) est agencée et du côté de la première carte (52, 52a, 52b) le long duquel la deuxième antenne (62b) est agencée.
